# EUROPÄISCHE PATENTANMELDUNG

(11) **EP 2 562 713 A1**
(43) Veröffentlichungstag der Anmeldung: **27.02.2013**
(21) Anmeldenummer: 12002564.8
(22) Anmeldetag: 11.04.2012
(51) Int. Cl.: G06Q 50/18, G06Q 50/26, G06Q 10/10

(54) **Endgerät zur Aufnahme und Aufbereitung von Daten zur Bestimmung von steuerlichen Pflichten einer leistenden Person**

(30) Priorität: 11.04.2011 DE 202011005136 U
(71) Anmelder: Burgmaier, Bernd, 81377 München (DE)
(72) Erfinder: Burgmaier, Bernd, 81377 München (DE); Krach, Thomas, 86150 Augsburg (DE)
(74) Vertreter: Szaunig, Bernd

(57) **Zusammenfassung**

Mit der vorliegenden Erfindung wird ein Endgerät (3), wie beispielsweise einem iPhone, das Teil eines Systems (1) ist, vorgestellt und in der Lage ist, dem Anwender einen ersten plausiblen Überblick zu seinen steuerlichen Pflichten auf dem Display einer Datenausgabeeinheit (5) eines mobilen Endgerätes (3) auf einfache und schnelle Weise bei Eingabe weniger Basisdaten liefert.

## Beschreibung

Die vorliegende Erfindung befasst sich mit einem Endgerät, wie beispielsweise einem iPhone, zur Aufnahme von Daten zur Bestimmung von steuerlichen Pflichten einer leistenden Person, insbesondere in der Lage ist, dem Anwender einen ersten plausiblen Überblick zu seinen steuerlichen Pflichten auf dem Display einer Datenausgabeeinheit eines mobilen Endgerätes auf einfache und schnelle Weise bei Eingabe weniger Basisdaten liefert.

Derartige Verfahren und Systeme sind aus der WO 2006/130692 A2 im Stand der Technik bekannt. Dieser Druckschrift ist ein tragbares Endgerät mit einer Tastatur und einem Display mit einem Mikroprozessor und einer Datenbank zum Abspeichern von Daten und Programmen zu entnehmen. Eines der gespeicherten Programme, im allgemeinen auch unter der Bezeichnung "Apps" bekannt geworden, erkennt ein Rechenereignis eines vorbestimmten Rechners bzw. Endgerätes. Als Reaktion auf dieses Ereignis werden dann weitere Unterprogramme unterdrückt oder aktiviert, um damit die Effektivität eines vorbestimmten Unterrichts unter Verwendung mehrere Endgeräte bei den Studenten oder Schülern zu steigern. Ferner ist aus der US 2010/0223579 A1 ein System und ein App bekannt geworden, das den Anwender in die Lage versetzt, ein auf dem Endgerät gespeichertes App zu kaschieren, um es vor Missbrauch anderer Benutzer zu schützen.

Ein weiteres Verfahren und dazugehöriges Systeme sind aus der DE 102 61 839 A1 bekannt. Dieser Erfindung ist eine System zu entnehmen, dessen Sinn und Zweck es ist, mit der Architektur bzw. dem eingebetteten Verfahren mit dem zugehörigen Programm eine Recherche nach anonymen Begriffen in Datenbanken elektronisch durchzuführen, weil dieser Vorgang oder Arbeitsschritt nicht mit einfacher Denkarbeit zu erledigen ist. Hierzu wird ein Suchbegriff in eine Maske über eine Tastatur eingegeben, um eine Datei mit einer Synonymliste zu erstellen. Das bei der Erfindung zugrunde liegende technische Problem ist, die Aussagekraft und Qualität bestimmter Suchbegriffe mit einer Reihe von Synonymen zu verbessern, damit der Suchende ein sichereres Gesamtbild vom eigentlichen Suchbegriff erhält, was er allein gedanklich nicht bewältigen kann, da ihm die gesamte Menge der Synonyme im Gehirn nicht zur Verfügung steht. Hier wird mit einem in ein System eingebetteten Programm mit technischen Mitteln eine Datei in Form einer Liste erstellt.

Als nachteilig am Stand der Technik wird es empfunden, dass diese bekannten Apps mit den dazugehörigen Systemen aus dem Stand der Technik nicht geeignet sind, einem Hilfesuchenden auf dem Gebiet der Abgabenordnung einen kurzen plausiblen Überblick zu bestimmten Fragen zu seiner Abgabensituation im Hinblick auf die Umsatzsteuer (VAT) zu verschaffen. Hieran ändert auch nicht die Tatsache, dass mittlerweile Programme auf dem Markt erhältlich sind, die in der Lage sind, alle Detailfragen bis ins Kleinste zu klären, aber den entscheidenden Nachteil haben, dass der normale Hilfesuchende nicht die Voraussetzungen, weder technisch noch rechtlich hat, um sich einen Überblick zu seinen steuerlichen Pflichten machen zu können. Der Hilfesuchende ist also bereits bei einer relativ einfachen kurzen Fragestellung gezwungen, einen Steuerfachmann zu Rate zu ziehen, was zeitaufwendig und kostspielig ist, insbesondere dann, wenn sich der Anwender im Ausland aufhält.

Daher ist es Aufgabe der vorliegenden Erfindung, einer auf dem Gebiet der Abgabenpflichten Hilfe suchenden Person eine technische, leicht zu bedienende technische Hilfe in Form eines Endgerätes zur Verfügung zu stellen, mit dem er unkompliziert mit technischer Hilfe in wenigen Schritten, allein durch Kenntnis seiner betrieblichen Situation in der Lage ist, sich einen Überblick zu seinen steuerlichen Pflichten zu verschaffen.

Diese Aufgabe wird mit den kennzeichnenden Merkmalen des Hauptanspruchs gelöst.

Das erfindungsgemäße Endgerät mit mindestens einem Mikroprozessor und einem Datenspeicher zur Aufbereitung und Durchführung des Zugriffs auf mindestens einen Datensatz zur Visualisierung mindestens einer Oberfläche auf dem Display des Endgerätes mit mindestens einer Dateneingabeeinheit, mit der Basisdaten des Anwenders einer Speichereinheit zugeführt werden, ist gekennzeichnet durch eine Aufteilung des Speichers in drei Grundbereiche, wobei im ersten Bereich Basisdaten allgemeiner Art zur Bestimmung der Leistungskategorie erfasst sind; und im zweiten Bereich spezielle Daten hinsichtlich der Art der Leistung abgelegt sind; und im dritten Bereich die Darstellung des Ergebnisses erfolgt, wobei die ermittelten Parameter aus dem ersten und zweiten Bereich einer Lösungsmatrix zur Darstellung der Zusammenfassung und/oder des Ergebnisses zugeführt werden, in der eine Zuordnung der Parameter in einem Speicherbereich zur Beurteilung eines steuerrechtlichen Tatbestands erfolgt und auf dem Display des Endgerätes in mindestens einer Maske erscheint.

Dabei ist es vorteilhaft, dass im Speicher des Endgerätes, das auch webbasiert sein kann, Referenz-Daten abgelegt und verglichen werden.

Dabei ist es auch vorteilhaft, dass das Verfahren, nach dem das System zur autaken Aufbereitung und Durchführung eines Zugriffs auf mindestens einen Datensatz in einer Datenbank zur Darstellung (Erstellung) einer ersten plausiblen Übersicht im Hinblick auf die umsatzsteuerrechtliche Situation im In- und Ausland (VAT) des Anwenders auf dem Display eines mobilen und/oder Endgerätes, das auch webbasiert sein kann, arbeitet, wobei mindestens einer Datenträgereinheit Basisdaten des Anwenders zugeführt werden, die in einem ersten Schritt mit den im System gespeicherten Daten aufbereitet und abgeglichen werden, was alternativ auch und mittels einer Webservicestation überprüft werden kann; und in einem zweiten Schritt die Aufnahme von Zusatzdatensätzen (Ausnahme derzeit Werklieferung)in mindestens 1 Schritt durchgeführt wird; und im dritten Schritt ein erstes Ergebnis erstellt wird, das auf dem Display des mobilen und/oder webbasierten Endgerätes in einer Maske in einer übersichtlichen kurzen Darstellung erscheint.

Ferner ist es vorteilhaft, dass mindestens ein Schritt die Bestimmung des Leistungsortes (Lieferung oder Dienstleistung bzw. Werklieferung) beinhaltet.

Vorteilhaft ist es auch, dass mindestens ein Schritt die Bestimmung der Lieferschwellen in einer Maske auf dem Display erscheint.

Vorteilhaft ist es auch, dass mindestens ein Schritt die Bestimmung und/oder die Ermittlung der Dienstleistungsart beinhaltet.

Vorteilhaft ist es ferner, dass die aufgenommenen Basisdaten zur statistischen Auswertung einem webbasierten externer Server zugeführt werden können.

Vorteilhaft ist es ferner, dass das mobile Endgerät eine Schnittstelle aufweist, die sowohl eine drahtlose Verbindung zu mindestens einem Netzwerk als auch zu mindestens einem Berater herstellt.

Ein weiterer Vorteil besteht darin, dass das Programm sowohl auf dem Speicher des mobilen Endgerätes als auch aus mindestens einem Netzwerk, z.B. dem Internet heruntergeladen werden kann.

Vorteilhaft ist es auch, dass das Display des mobilen Endgerätes in einzelne Berührungsflächen aufgeteilt ist, die bei Berührung ein Signal auslösen und mindestens ein Unterprogramm starten.

Vorteilhaft ist es ferner, dass die Programmstruktur des Anfangsteils des implementierten Computerprogramms einerseits horizontal und andererseits vertikal angelegt ist.

Vorteilhaft ist ferner, dass der Anwender (Kunde) dem Ergebnis entnehmen kann, welche steuerlichen Pflichten Wer, Wann, Wo als Leistender oder Empfänger und/oder aus welchem steuerlichen Grund er zu leisten hat.

Die Art und Weise in der das erfindungsgemäße Endgerät bedient wird, erfolgt im Wesentlichen in drei Schritten und zwar in
a) Schritt 1 erfolgt die Eingabe allgemeiner Daten (z.B. Sitz, Umsatzsteuer-Identifikationsnummer...) zum Leistenden, dem Leistungsempfänger und der Art der Leistung (Lieferung oder Dienstleistung).
b) Schritt 2 werden, wenn notwendig, Zusatzangeben in Abhängigkeit der in Schritt 1 angegebenen Daten erfasst und aufbereitet.
c) Schritt 3 erfolgt eine Zusammenfassung der in Schritt 1 und Schritt 2 eingegebenen Daten und eine Ergebnisdarstellung.

Dabei kann jeweils in den vorhergehenden Schritt zurückgesprungen werden. Die einzelnen Schritte können auch zur Vereinfachung der Bedienung und in Abhängigkeit zum Endgerät in einzelne Dialoge aufgeteilt werden. In der Lösungsmatrix erfolgt eine Zuordnung von Parametern zur Erfüllung eines umsatzsteuerrechtlichen Tatbestands zu einer im Speicher des Endgeräts oder auf einem Webserver oder zukünftigen Speichers befindlichen steuerrechtlichen Beurteilung. Die Lösungsmatrix passt sich durch eine Aktualisierung der Software oder über den Zugriff auf einen Webserver flexibel an den aktuellen Stand der Rechtslage und Rechtsprechung an.

Dabei umfassen die Parameter z.B.
- Art der erbrachten Leistung
- Art, Anzahl und Sitz der Beteiligten (juristischen) Personen
- Liegt eine gültige Umsatzsteuer-Identifikationsnummer für Leistenden und/oder Leistungsempfänger vor
- Liegt ein Export- oder Liefernachweis vor
- Lieferschwelle überschritten
- Wer ist Zollanmelder
- Liegt eine Einzelleistung oder ein Bündel an Leistungen vor
- Zutreffen von Sonderregeln

Durch das Setzen der Parameter wird das in Schritt 3 beschriebene Ergebnis beeinflusst und ausgegeben. Der Ergebnisaufbau einer steuerrechtlichen Beurteilung besteht im Regelfall aus
a) aus dem Ergebnis aus Sicht des Leistenden und
b) aus dem Ergebnis aus Sicht des Leistungsempfängers kann aber auch nur aus einer der beiden o.g. Ansichten bestehen.

Eine Ergebnisansicht besteht im Minimalfall aus folgenden Informationen:
**a)** Vorliegen der Steuerpflichtigkeit
**b)** Ort/Land der Steuerpflicht
   Im Regelfall werden die o.g. Informationen ergänzt durch
**c)** Steuersatz
**d)** Erklärungspflicht (Hinweise)
**e)** Rechtliche Folgen
**f)** Notwendige Rechnungsergänzungen
**g)** Erforderliche Nachweise.
**h)** Je nach Bedarf werden weitere Informationen angeboten z.B. Sonderfälle, vorausgefüllte Download-Dokumente, Rechtssprechungen, usw.

Im nun Folgenden wird die Erfindung anhand von Zeichnungen im Einzelnen näher beschrieben. Es zeigt
- Fig. 1:: ein Blockschaltbild des Systems (1) mit den verschiedenen Einrichtungen (2 - 9);
- Fig. 2:: einen Überblick zur Aufteilung des Speichers (2) in drei Basisbereiche (10,11,12);
- Fig. 3:: die Oberflächen verschiedener Module (13, 14, 14') zur Erfassung der allgemeinen Daten mit den entsprechenden Berührungsfeldern;
- Fig. 4:: die Oberflächen verschiedener Module (15,15,15') zur Erfassung von Daten für die Lieferung einer Leistung mit den entsprechenden Berührungsfeldern;
- Fig. 5:: die Oberflächen verschiedener Module zur Erfassung von Daten am Beispiel von Dienstleistungen mit den entsprechenden Berührungsfeldern;
- Fig. 6:: die Oberflächen zweier Module zur Darstellung der Zusammenfassung und des Ergebnisses;
- Fig. 7:: eine schematische Darstellung der Programmstruktur mit den wichtigen Einzelmodulen (12 - 21, LF, WL, DL);
- Fig. 8:: eine detaillierte Darstellung des Moduls LF(Lieferung);
- Fig. 9:: eine detaillierte Darstellung des Moduls WL (Werklieferung);
- Fig. 10:: eine detaillierte Darstellung des Moduls DL (Dienstleistung);
- Fig. 11:: eine Zusammenfassung der Darstellungen aus Fig. 8 - 10 in Form einer Matrix für Lieferung, Werklieferung und Dienstleistung.

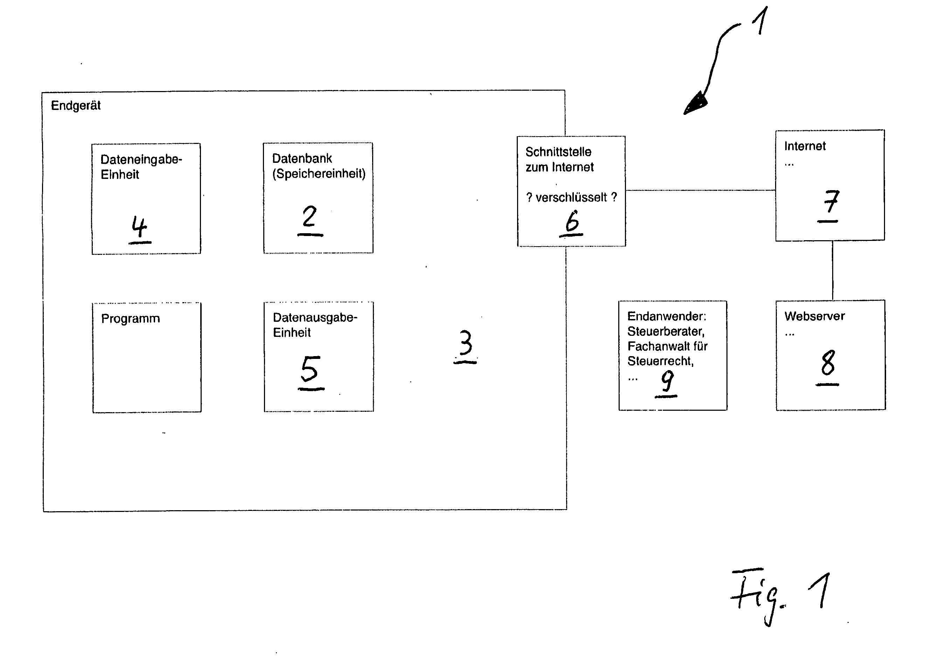

Die Fig. 1 zeigt eine Blockdarstellung des System 1 mit den verschiedenen Einrichtungen. Das System 1 weist im Wesentlichen mindestens eine Speichereinheit 2 auf, die innerhalb des Endgerätes 3 mit einer Dateneingabeeinheit 4 und einem Display 5 in Verbindung steht. Ferner weist das Endgerät 3 eine Schnittstelle 6 auf, mit der drahtlos und ggf. verschlüsselt eine Verbindung zu mindestens einem Netz 7 hergestellt werden kann. Über dieses mindestens eine Netz 7 kann ggf. verschlüsselt sowohl eine Verbindung zu mindestens einem zentralen Server 8 als zu mindestens einem Datenverarbeitungsgerät 9, z. B. eines Beraters, hergestellt werden, dem verschlüsselte Daten übermittelt werden. Mit diesem System 1 der vorliegenden Erfindung ist der Anwender in der Lage, sich ein erstes plausibles Ergebnis zu seiner umsatzsteuerrechtlichen Beurteilung der umsatzsteuerrechtlichen Situation in dem jeweiligen Land (VAT) auf dem Display 5 eines mobilen Endgerätes 3 auf einfache und schnelle Weise bei Eingabe weniger Basisdaten zu verschaffen. Dieser erste Überblick kann auch auf einem mobilen Datengerät, wie beispielsweise einem iPhone, iPad, iPot o.ä. (z. B.SMART PHONE ANDROID SOFTWARE) ermittelt werden.

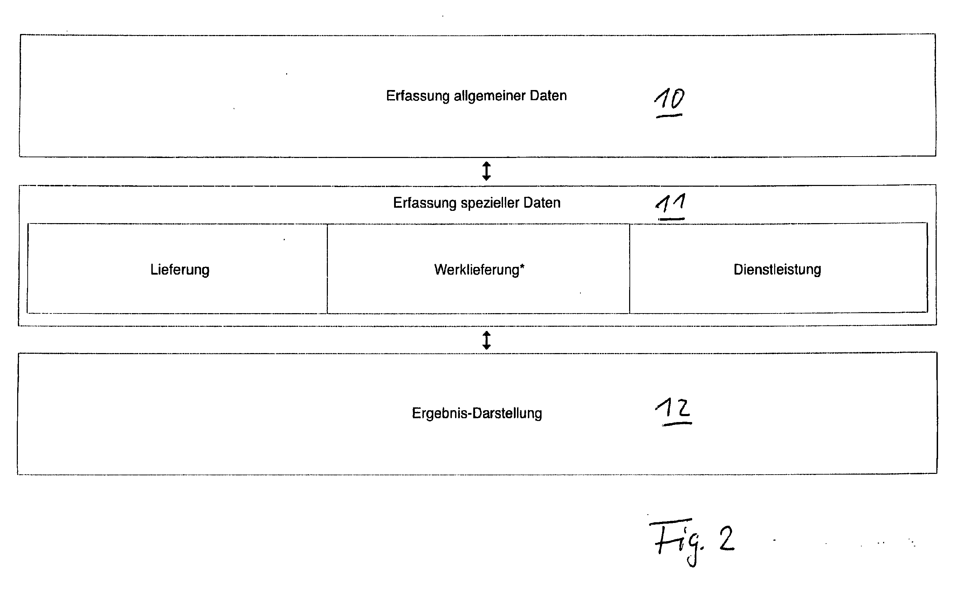

Die Fig. 2 zeigt einen Überblick zur Aufteilung des Speichers 2 in drei Basisbereiche 10, 11 und 12. Dabei dient der Bereich 10 der Erfassung der allgemeinen Daten wie beispielsweise Sitz, Umsatzsteuer-Identifikationsnummer zum Leistenden, dem Leistungsempfänger und der Art der Leistung (Lieferung oder Dienstleistung; Werklieferung), in einem ersten Schritt 1 bei der Bedienung des erfindungsgemäßen Endgerätes 3 im Zusammenhang mit dem implementierten Anwenderprogramm (App). In einem zweiten Schritt in der Anwendung werden, wenn notwendig, Zusatzangeben in Abhängigkeit der im Bereich 10 ermittelten und angegebenen Daten erfasst und aufbereitet. Dieser Bereich beinhaltet im Wesentlichen Daten zur Lieferung bzw. zur Werklieferung, Dienstleistung die optional eingegeben werden können und Daten zur Dienstleistung eingegeben. Die Einteilung des Speichers 2 in drei Bereiche bewirkt im Wesentlichen ein rasches vorläufiges Endergebnis, ohne auf Details eingehen zu müssen, die prinzipiell der sog. REVERSE CHARGE TABELLE zu entnehmen sind, der im Zusammenhang mit dem zu erstellenden Ergebnis die konkrete Ausgabe des Ergebnisses über die Steuerpflicht des Leistenden bzw. Leistungsempfängers in Abhängigkeit des jeweiligen Landes in dem die Besteuerung zu erfolgen hat

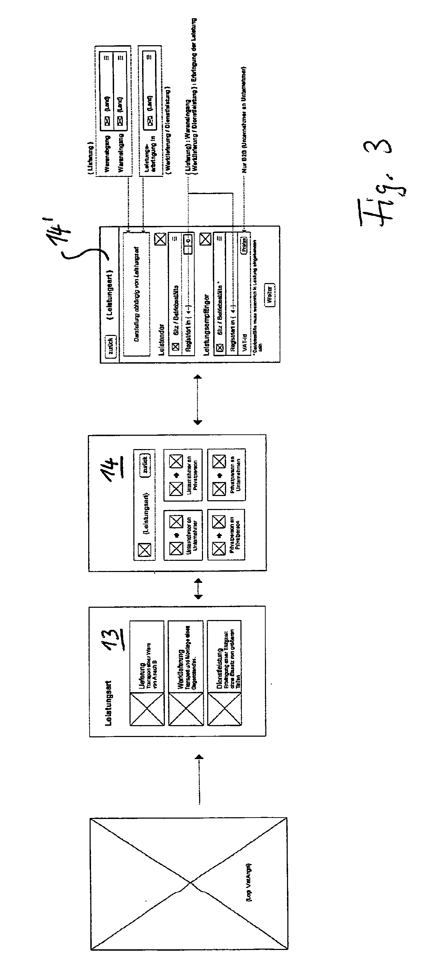

Die Fig. 3 zeigt die Oberflächen verschiedener Module aus dem ersten Bereich 10 zur Erfassung der Basisdaten, wie oben dargelegt wurde. Die einzelnen Module sind in verschiedene Berührungsflächen 13, 14, 14' eingeteilt, die bei Betätigung eine entsprechende Subroutine im Programm aufrufen, um den entsprechenden Befehl auszuführen oder ein Fenster zu öffnen, in das Basis-Daten eingegeben werden können. Dabei ist die Oberfläche in eine Mehrzahl von Berührungsfeldern aufgeteilt, mit deren Hilfe durch Berührung Daten aufgenommen werden und diese Daten einem Speicherbereich im Datenspeicher 2 des mobilen Endgerätes 3 zugeführt werden, wobei z. B. bei Berührung eines Berührungsfeldes ein vorbestimmtes elektronisches Signal erzeugt wird, das dem implementierten Programm zugeführt wird, wodurch weitere Folgemasken auf dem Display angezeigt werden. Diese Folgemasken weisen verschiedene Frage- und Antwortfelder auf, z. B. welche Nationalität der Anwender des Endgerätes 3 hat, um damit im Programm die entsprechende Initialisierung zu steuern.

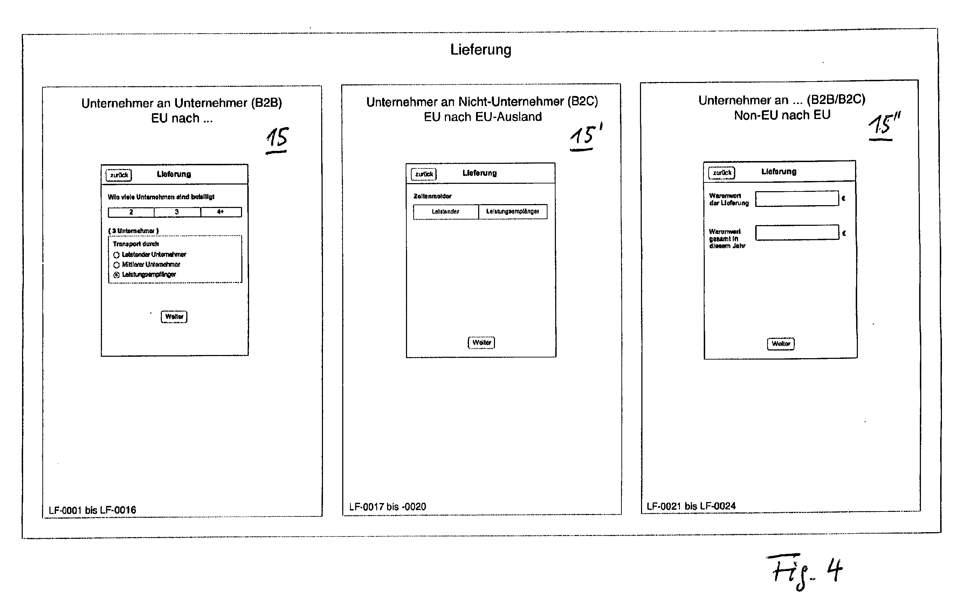

Die Fig. 4 zeigt die Oberflächen verschiedener Module 15, 15', 15" aus dem zweiten Bereich 11 zur Erfassung zusätzlicher Daten (Schritt 2), die Zusatzangeben in Abhängigkeit der in Schritt 1 angegebenen Daten beinhalten und aufbereitet. In diesem zweiten Schritt werden spezifische Zusatzdaten zur Erfassung von Daten für Lieferungen, Werklieferungen oder Dienstleistungen aufgenommen, die zur Erstellung eines ersten plausiblen Ergebnisses zu den steuerlichen Pflichten des Anwenders oder Kunden, z.B. zur Umsatzsteuerabgabe (VAT) in Abhängigkeit der Anforderungen des jeweiligen Landes notwendig sind.

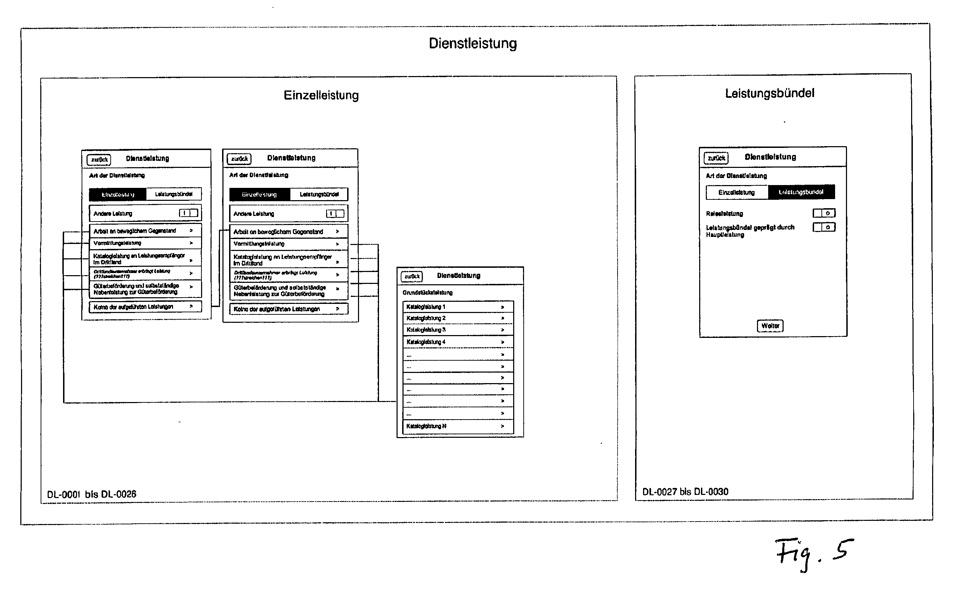

Die Fig. 5 zeigt die Oberflächen verschiedener Module aus dem zweiten Bereich 11 zur Erfassung von Daten für Dienstleistungen, die in verschiedene Arten unterteilt sind und der Anwender sich die für seine Dienstleistung passenden Button heraussucht.

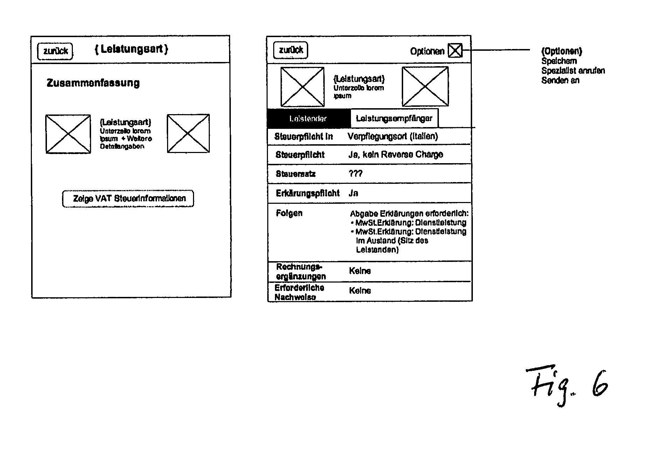

Die Fig. 6 zeigt die Oberflächen zweier Module zur Darstellung der Zusammenfassung und des ersten plausiblen Ergebnisses aus dem dritten Schritt, bei dem eine Zusammenfassung der in Schritt 1 und Schritt 2 eingegebenen Daten und eine Ergebnisdarstellung erfolgt.

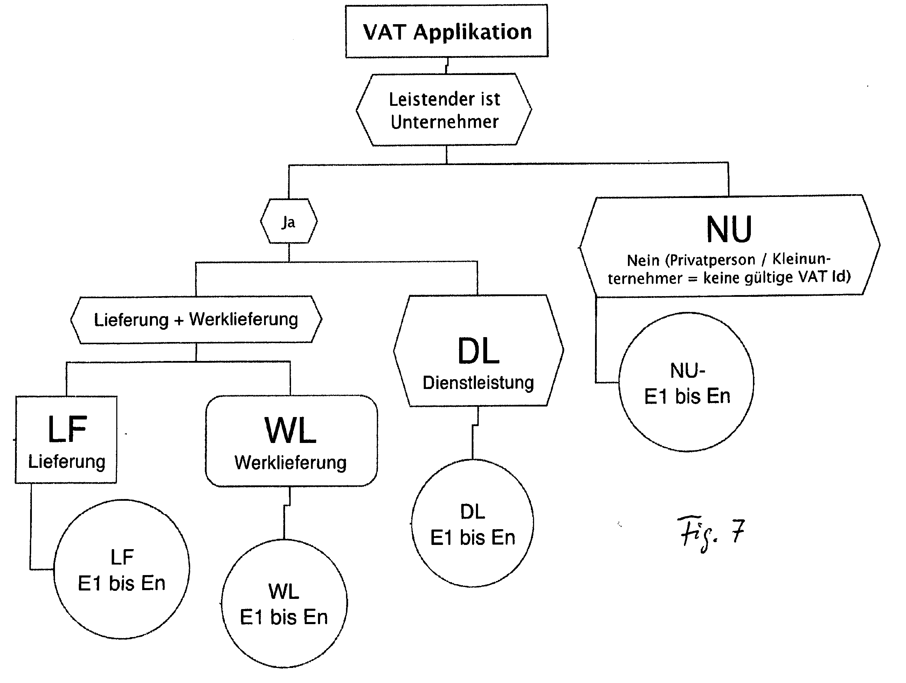

Die Fig. 7 zeigt eine schematische Programmstruktur mit den wichtigen Einzelmodulen (LF, WL, DL, NU) des gesamten Anwenderprogramms (App), das in einem Endgerät 3 abgelegt ist. Auch hieraus geht bereits die Einfachheit der Anwendung hervor, weil bereits nach der Eingabe von mindestens zwei Basisdaten (LF und WL oder DL) ein erstes Ergebnis erstellt wird.

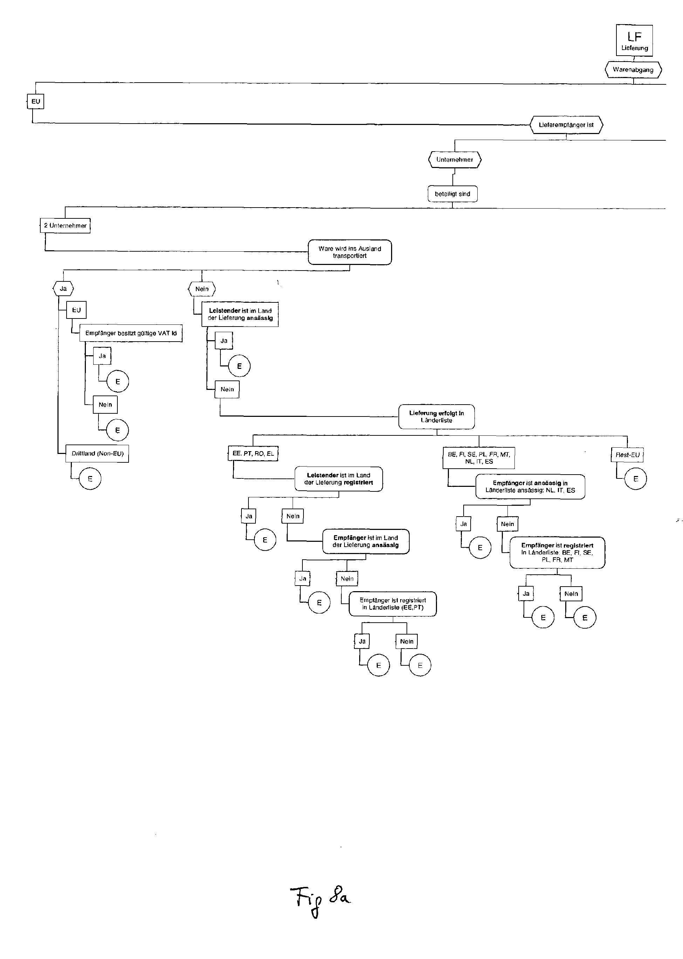

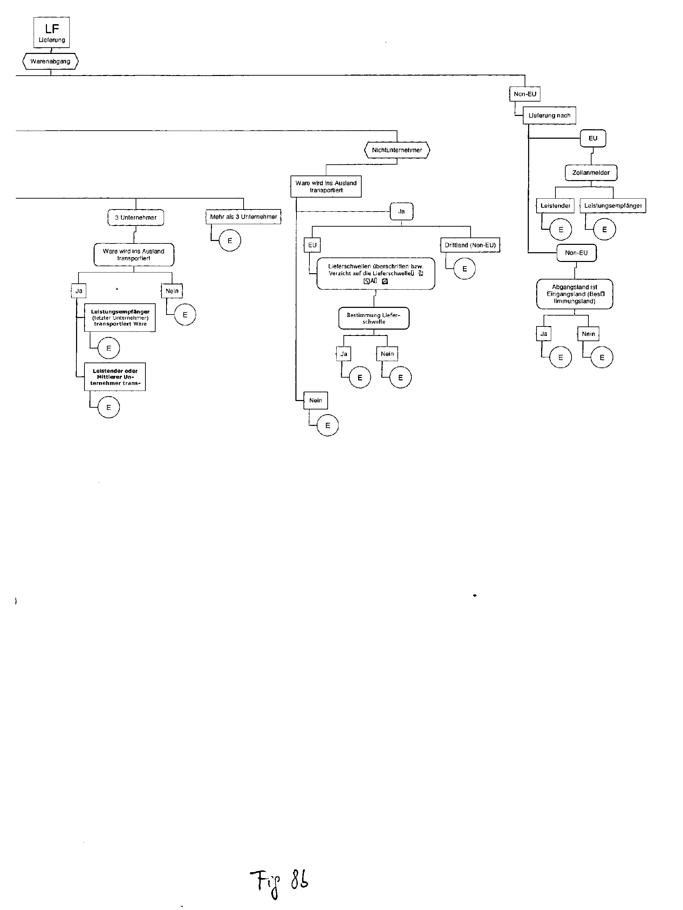

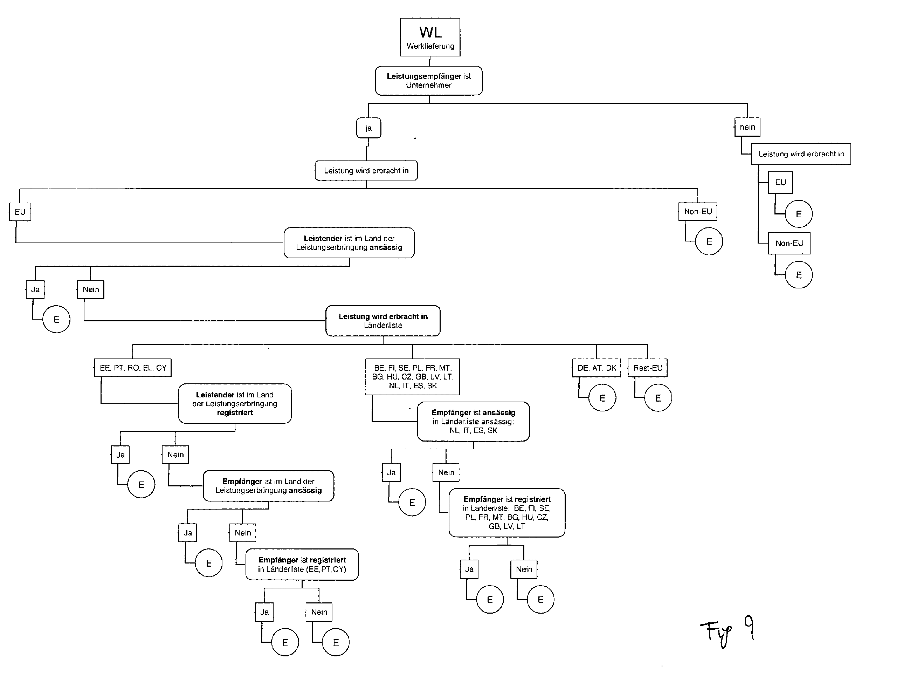

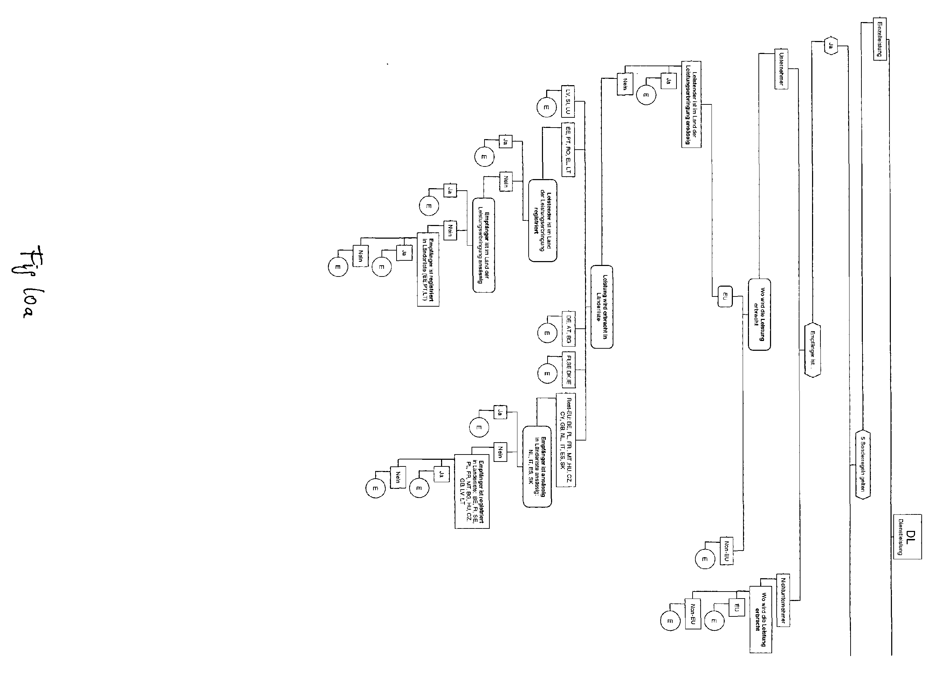

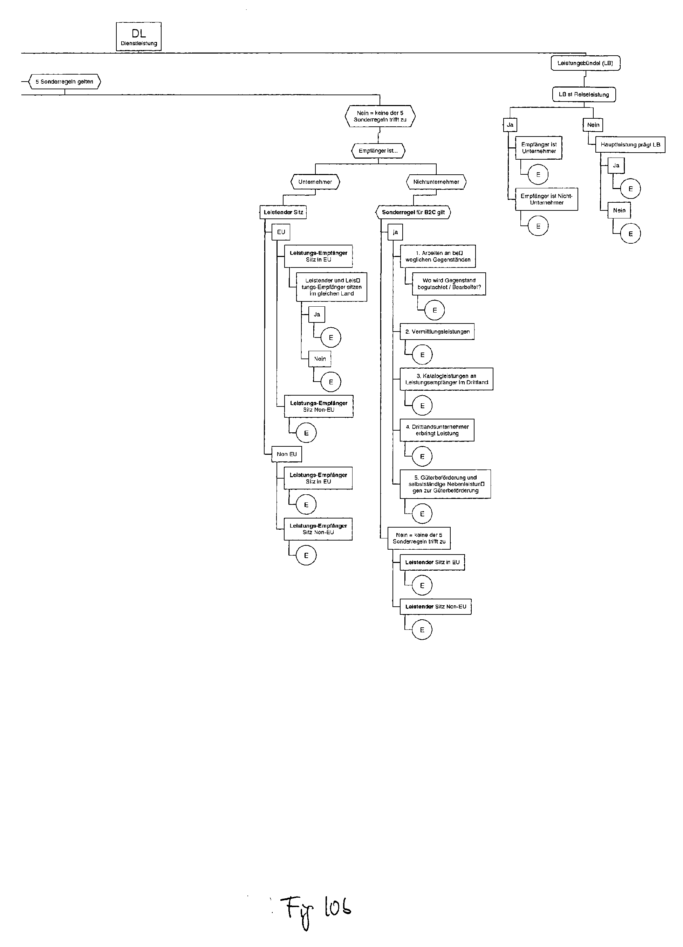

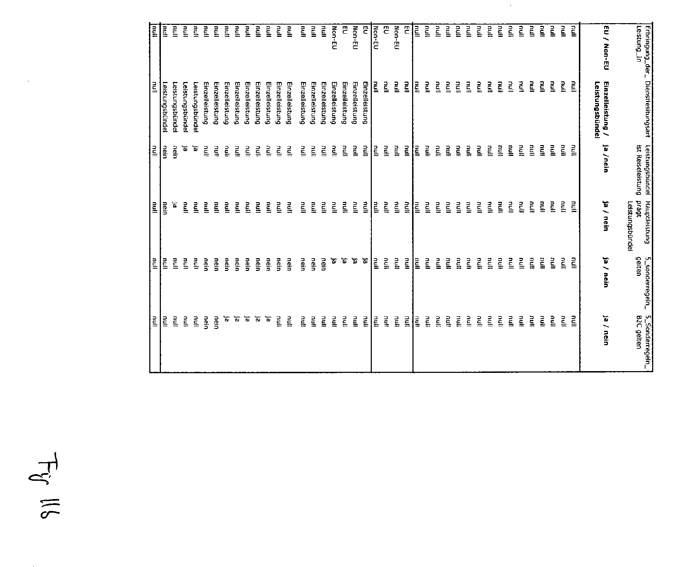

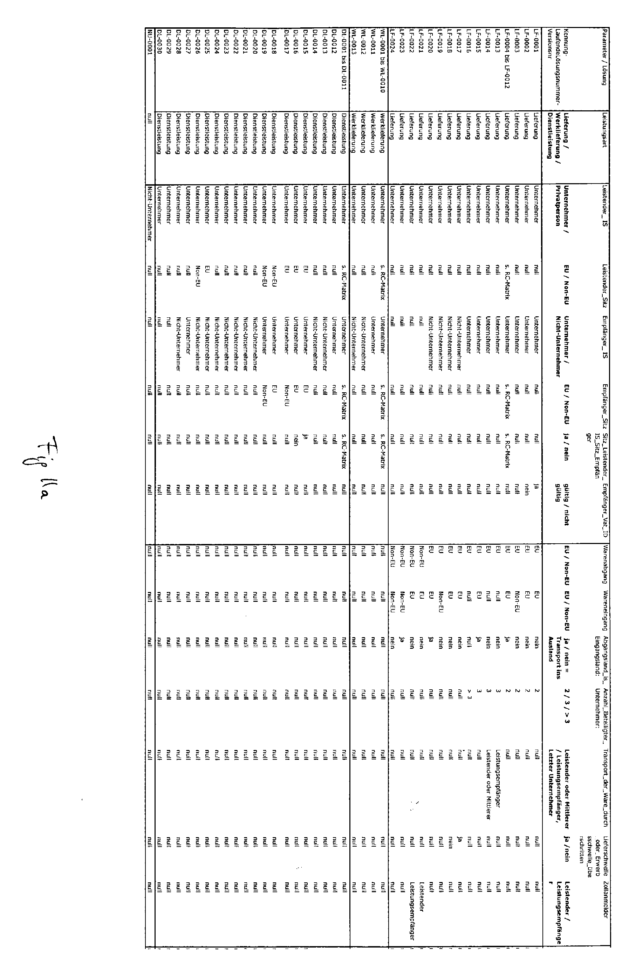

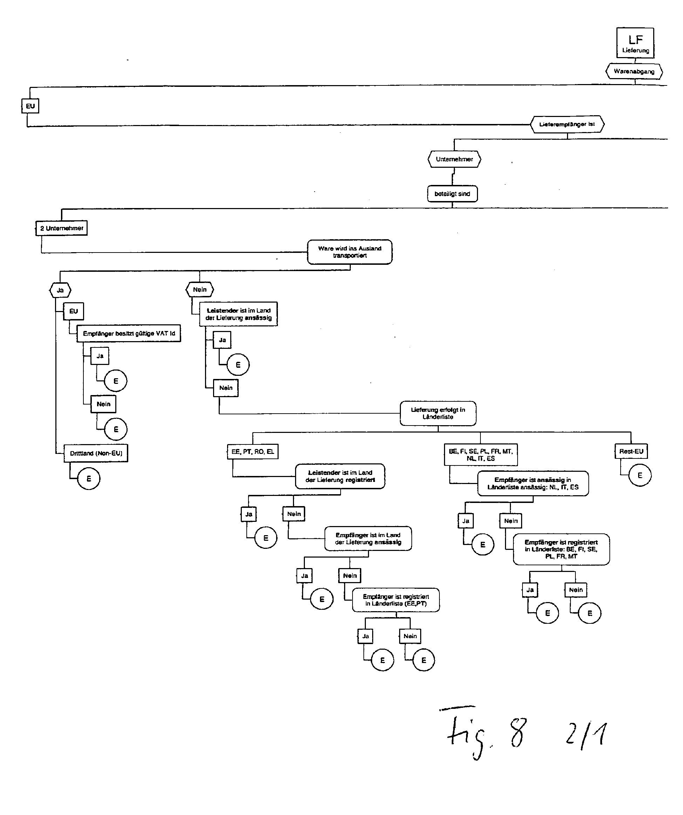

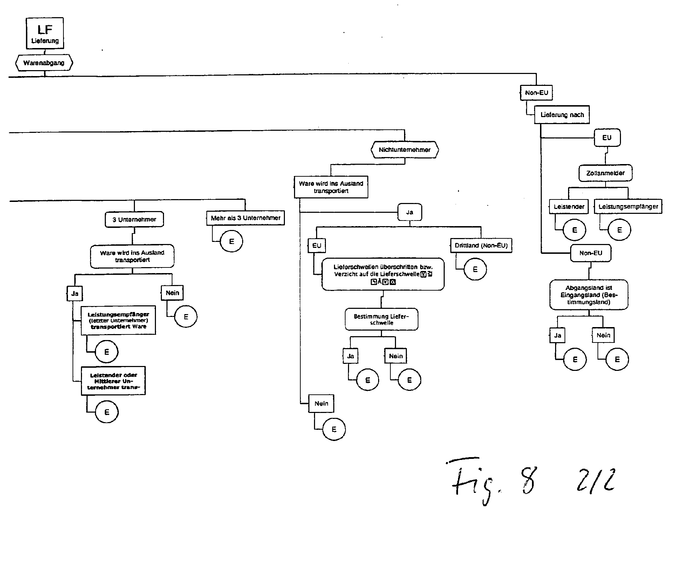

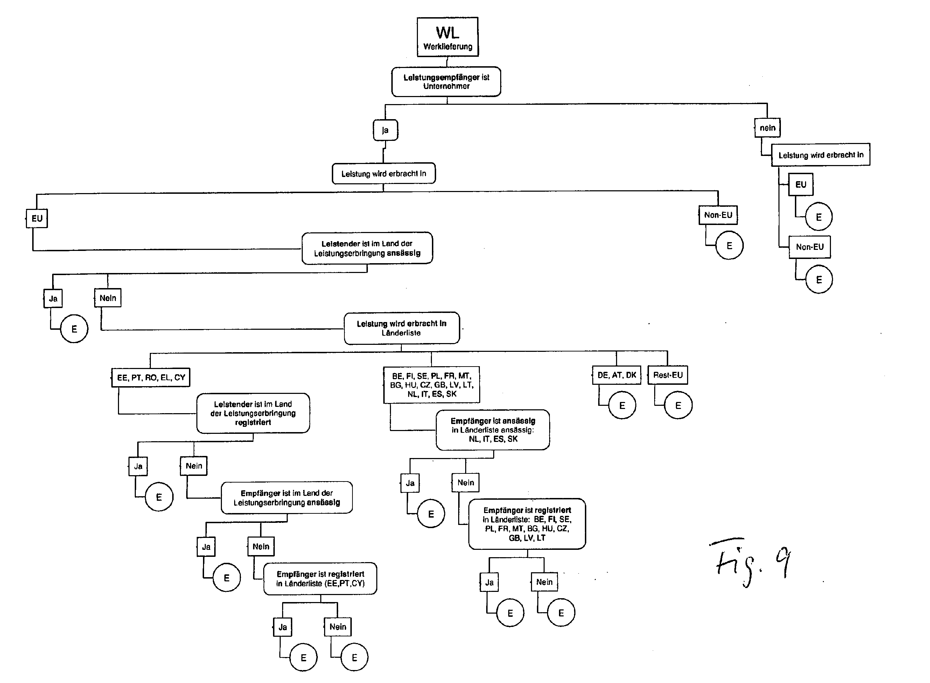

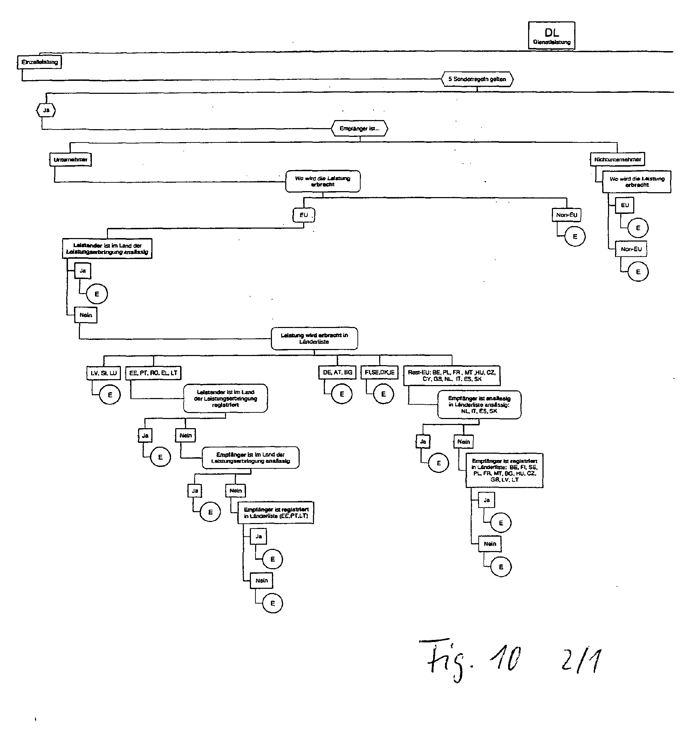

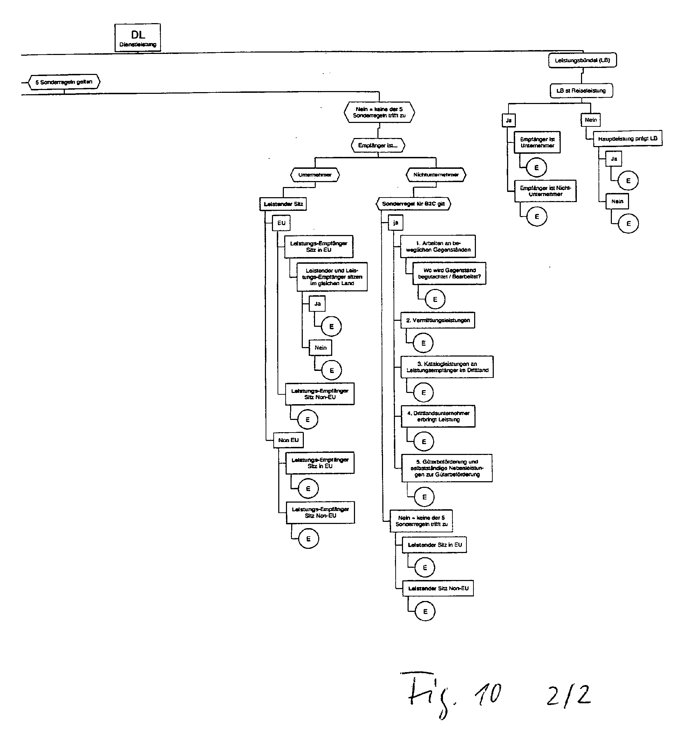

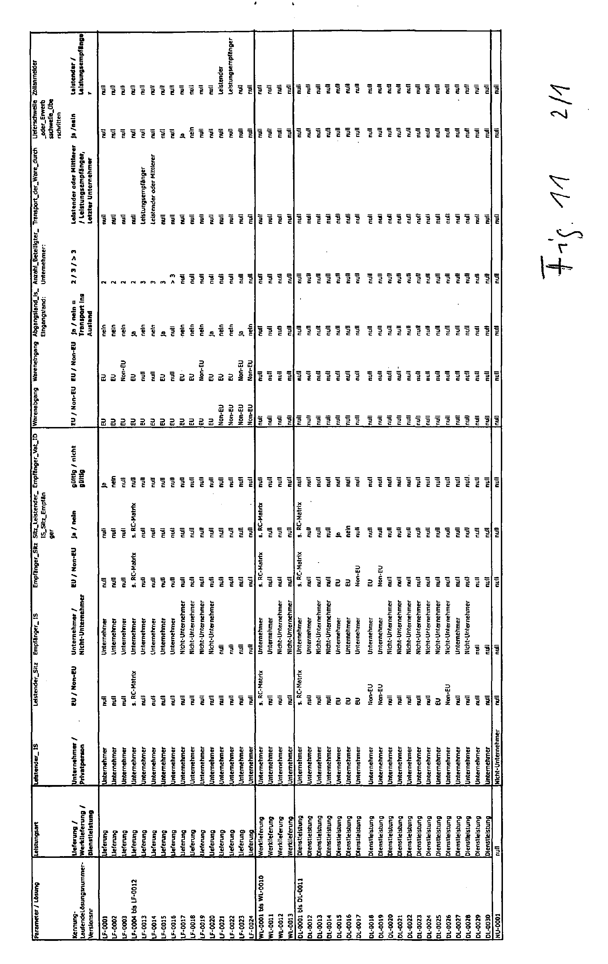

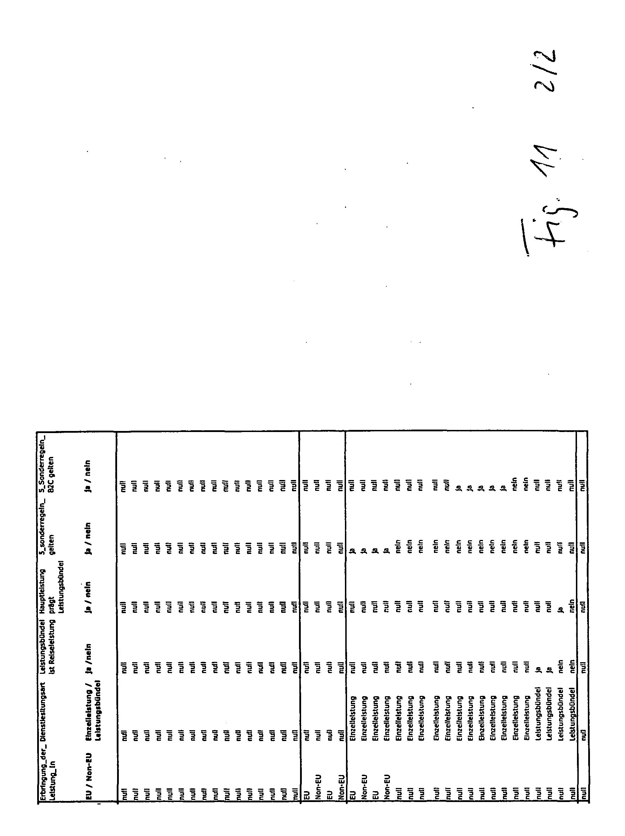

In den Fig. 8 - 10 werden Einzelheiten, bzw. einzelne Programmschritte bzw. Datenflüsse näher symbolisiert, die bei der Ermittlung der Parameter für die Lösungsmatrizen 18, 18', 18" und 19, 19', 19" notwendig sind. Die ermittelten Parameter werden anschließend den Speicherplätzen für die Lösungsmatrix zugeführt, die beispielhaft in Fig. 11 schematisiert sind.

Die Struktur des implementierten Computerprogramms 20 weist anfänglich mindestens eine horizontale Ebene auf, die Sonderregelungen zur Person des Anwenders beinhaltet und mittels Betätigung (Berührung des entsprechenden Berührungsfeldes) des entsprechenden Buttons eine Richtung des Programmablaufs bestimmt. Ferner weist die Struktur des Programms mindestens eine vertikale Richtungsführung auf. Diese vertikalen Richtungen sind im Einzelnen bestimmt durch die Eingabe der Basisdaten in einer der horizontalen Ebenen des implementierten Computerprogramms 20. Im entsprechenden Speicherplatz 2 werden Daten abgelegt, die Bestimmungs- und Lieferschwellen in der Europäischen Union festlegen. Die Speichereinheit 2 beinhaltet auch Daten zur Festlegung des Leistungskatalogs und für das Endergebnis in der Maske des Displays 5 ausschlaggebend. Die Speicherplätze beinhalten verfeinerte Daten zur Art der Dienstleistung, z. B. ob es sich um eine Grundstücksleistung oder eine kurzfristige Vermietung oder eine Veranstaltungs-Dienstleistung oder im Rahmen einer Restaurent-Verpflegungs-Dienstleistung oder Daten einer Personenbeförderungs-Dienstleistung handelt. In einem weiteren Speicherplatz werden Daten zur Katalogleistung an Nichtunternehmer in Drittländern gespeichert, oder in einem weiteren Speicherplatz sind Daten zur Art des Dienstleisters in einem Drittland abgelegt, oder in einem weiteren Speichermodul werden Daten zu Nebenleistungen im selbständigen Güterbeförderungsbereich gespeichert. Auf diese in den verschiedenen Modulen gespeicherten Daten hat das implementierte Programm Zugriff und erstellt ein Endergebnis auf dem Display 5 des mobilen Endgerätes 3, das dem Anwender zumindest einen ersten Überblick zu seiner umsatzsteuerlichen Situation in Abhängigkeit von den konkreten Forderungen des jeweiligen Landes verschafft.

Die in Fig. 11 gezeigten Matrizen 18, 18', 18" und 19, 19', 19" zeigen die Struktur und Zusammenfassung des Ergebnisses eines Anwendungsfalles in Bezug auf bestimmte Eintrittsberechtigungen zu Veranstaltungen auf dem Gebiet der Kultur, Wissenschaft, Sport o.ä. Diese Matrizen bestehen aus drei Spalten, wovon die ersten Spalte Daten zu Fragen aufweist, die sich im Wesentlichen auf den Leistenden und den Leistungsempfänger beziehen. Die zweite und dritte Spalte enthält Daten zu der Art der Leistung des Anwenders, z. B. ob es sich um eine Lieferung, Werklieferung oder eine Dienstleistung handelt.

Insgesamt stellt die Verknüpfung von Basisdaten und der konkreter steuerlichen Situation in Verbindung mit der sog. Reversed Charge Tabelle des jeweiligen Landes ein nützliches Hilfsmittel zur Einschätzung der steuerrechtlichen Situation dar.

Das Endgerät 3, wie beispielsweise ein iPhone, ist Teil eines Systems des 1, das dem Anwender einen ersten plausiblen Überblick zu seinen steuerlichen Pflichten auf dem Display einer Datenausgabeeinheit 5 des mobilen Endgerätes 3 auf einfache und schnelle Weise bei Eingabe weniger Basisdaten liefert.

## Patentansprüche

1. Endgerät (1) mit mindestens einem Mikroprozessor und einem Datenspeicher (2) zur Aufbereitung und Durchführung des Zugriffs auf mindestens einen Datensatz zur Visualisierung mindestens einer Oberfläche auf dem Display (5) des Endgerätes (3) mit mindestens einer Dateneingabeeinheit (4), mit der Basisdaten des Anwenders einer Speichereinheit zugeführt werden, **gekennzeichnet durch** eine Aufteilung des Speichers in drei Grundbereiche, wobei
- im ersten Bereich Basisdaten allgemeiner Art zur Bestimmung der Leistungskategorie erfasst sind; und
- im zweiten Bereich spezielle Daten hinsichtlich der Art der Leistung abgelegt sind;
- im dritten Bereich die Darstellung des Ergebnisses erfolgt, wobei die ermittelten Parameter aus Schritt eins und zwei einer Lösungsmatrix zur Darstellung der Zusammenfassung und/oder des Ergebnisses zugeführt werden, in der eine Zuordnung der Parameter in einem Speicherbereich zur Beurteilung eines steuerrechtlichen Tatbestands in Abhängigkeit von der jeweils im Einzelfall geltenden konkreten Besteuerungsregelung in dem jeweiligen Land (sog. Reversed-Charge-Verfahren) erfolgt und auf dem Display (5) des Endgerätes (3) in mindestens einer Maske erscheint.

2. System nach Anspruch 1, **dadurch gekennzeichnet, dass** auf dem Display (5) des Mobilen Endgerätes nach Aufnahme von mindestens drei Schaltschritten ein erstes Ergebnis angezeigt ist, das dem Anwender einen ersten Überblick zu seiner Fragestellung liefert.

3. System nach Anspruch 1, **dadurch gekennzeichnet, dass** mindestens ein Schritt die Bestimmung des Leistungsortes beinhaltet.

4. System nach Anspruch 1, **dadurch gekennzeichnet, dass** mindestens ein Schritt die Bestimmung und/oder Ermittlung der Dienstleistungsart beinhaltet.

5. System nach einem der vorangegangenen Ansprüche, **dadurch gekennzeichnet, dass** das Endgerät (1) eine Schnittstelle aufweist, die sowohl eine drahtlose Verbindung zu mindestens einem Netzwerk als auch zu mindestens einem Berater herstellt.

6. System nach einem der vorangegangenen Ansprüche , **dadurch gekennzeichnet, dass** das Programm sowohl auf dem Speicher des Endgerätes implementiert sein, als auch aus mindestens einem Netzwerk implementiert, z.B. dem Internet, und heruntergeladen werden kann.

7. System nach einem der vorangegangenen Ansprüche , **dadurch gekennzeichnet, dass** das Display des Endgerätes (3) in einzelne Schaltflächen (12; 13) aufgeteilt ist, die bei Berührung ein Signal generieren, das mindestens ein Unterprogramm startet.

8. System nach einem der vorangegangenen Ansprüche, **dadurch gekennzeichnet, dass**
die Programmstruktur des implementierten Computerprogramms matrixmäßig einerseits horizontal und andererseits vertikal ausgebildet ist.

9. System nach einem der vorangegangenen Ansprüche, **dadurch gekennzeichnet, dass** das mindestens erste Ergebnis auf dem Display (5) des mobilen Endgerätes (3) mindestens einem Berater drahtlos zugeführt werden kann.

10. Verfahren zur Aufbereitung und Durchführung des Zugriffs auf mindestens einen Datensatz zur Visualisierung mindestens einer Oberfläche auf dem Display (5) eines Endgerätes (3) mit mindestens einer Dateneingabeeinheit (4), mit der Basisdaten des Anwenders einer Speichereinheit zugeführt werden, **gekennzeichnet durch** folgende Verahrensschritte:
Aufteilung des Speichers in drei Grundbereiche, wobei
- im ersten Bereich Basisdaten allgemeiner Art zur Bestimmung der Leistungskategorie erfasst sind; und
- im zweiten Bereich spezielle Daten hinsichtlich der Art der Leistung abgelegt sind; und
- im dritten Bereich die Darstellung des Ergebnisses erfolgt, wobei die ermittelten Parameter aus Schritt eins und zwei einer Lösungsmatrix zur Darstellung der Zusammenfassung und/oder des Ergebnisses zugeführt werden, in der eine Zuordnung der Parameter in einem Speicherbereich zur Beurteilung eines steuerrechtlichen Tatbestands in Abhängigkeit von der jeweils im Einzelfall geltenden konkreten Besteuerungsregelung in dem jeweiligen Land (sog. Reversed-Charge-Verfahren) erfolgt und auf dem Display (5) des Endgerätes (3) in mindestens einer Maske erscheint.
